# EUROPEAN PATENT APPLICATION

(11) **EP 0 565 248 A2**
(43) Date of publication of application: **13.10.1993**
(21) Application number: 93302030.7
(22) Date of filing: 17.03.1993
(51) Int. Cl.: G01N 1/26, H01J 49/04, G01N 1/28, G01N 7/18

(54) **Gas-measuring device**

(30) Priority: 20.03.1992 GB 9206071
(71) Applicant: ISIS INNOVATION LIMITED, Oxford OX1 3UB (GB)
(72) Inventor: Corfield, Richard Murray, Long Hanborough, Oxon OX8 8BN (GB)
(74) Representative: Pennant, Pyers

(57) **Abstract**

s7 Gas-measuring device, particularly for analysis of carbonate samples, comprises a carousel of reaction vessels 16, each to contain separate aliquots of sample and reagent and connected to a common vacuum pump 49, an action station provided with means 27 for disturbing a reaction vessel so as to mix the separated reactants therein, a water trap 36, a cold finger 38 and a mass spectrometer for recovering and measuring carbon dioxide gas generated by the mixed reagents. The device can also be operated in a multiport gas admission mode to measure pre-formed samples of gas.

## Description

This invention relates to gas-measuring devices. A preferred embodiment, described below, concerns the analysis of carbonate samples, by reacting them with acid and measuring the carbon dioxide gas generated (carbonate digestion mode). This device may also act as a multiport gas admission system for gases generated off-line (multiport mode).

In known carbonate digestion devices of this kind, each sample is reacted in turn with acid under vacuum; the evolved gas is passed over a cold trap to remove water; and the resulting dry carbon dioxide is passed, directly or indirectly, to a measuring instrument such as a mass spectrometer. (J. M. McCrea, J. Chem. Phys., 18, No. 6, 849-857, 1950).

One such device is marketed by VG Isotech (formerly VG Isogas) Limited. Each sample is dropped in turn, by means of a rotating carousel, under vacuum into an acid bath. The same acid is used for all the samples. As a result, the acid residue cannot be analysed for non-volatile components; and there is a risk of memory effects arising from incompletely reacted samples or from oxygen-18 exchange effects.

Another such device has been marketed as the Carbo Kiel-MAT 251 system. A plunger moves a sample thimble vertically which is then evacuated. This has the disadvantage that vacuum has to be imposed separately for each sample. Repeated evacuations and apparent mechanical and microprocessor complexity inevitably impose mechanical problems, and breakdowns occur frequently.

A preferred device of the present invention avoids the problems of the prior art. A separate aliquot of acid (or other reagent) is used for each sample. And all the samples present in a carousel are evacuated simultaneously in a single operation.

In one aspect this invention provides a gas measuring device comprising a carousel of vessels, each to generate a sepa!ate aliquot of a gas and connected to a common vacuum pump, an action station provided with means for disturbing a vessel, means for recovering and measuring a gas thereby generated, and means for effecting relative movement of the carousel and the action station so as to bring each vessel in turn to the action station. Preferred devices according to this aspect of the invention are capable of operating also in the multiport mode.

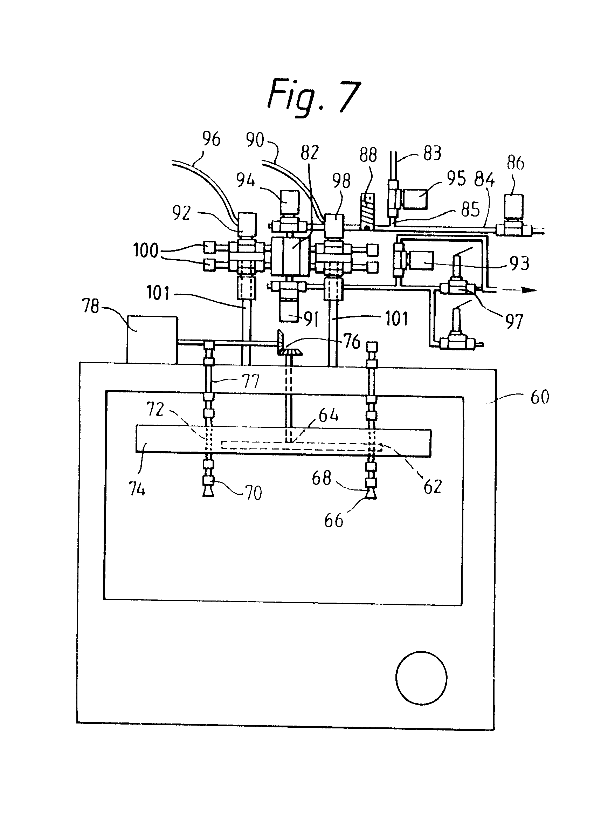

In the multiport mode the invention provides a gas measuring device comprising a common manifold leading to common gas-measuring means and connected to a common vacuum pump, and a plurality of sample vessels each to contain or generate an aliquot of a gas to be measured and means for introducing the gas contained or generated in each sample vessel successively into the common manifold. Preferably each sample vessel is in communication through a valve with the common manifold, and there are provided means for opening a first valve connecting a first sample vessel to the common manifold, closing the first valve, and successively opening and closing each other valve connecting each other sample vessel to the common manifold. Preferably the valves are arranged in radial symmetry round the common manifold. This is the multiport mode, an embodiment of which is described below with reference to Figure 7 of the drawings.

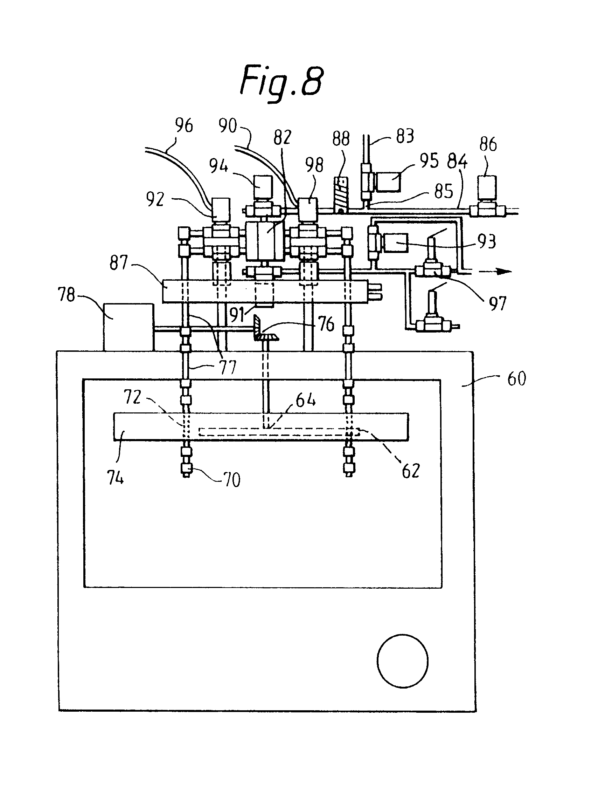

In the former of the two above aspects, the gas measuring device comprises a carousel of vessels, each of which is destined in use to generate a separate aliquot of a gas to be measured. In one embodiment of the invention, each vessel is a sealed gas-containing vessel. As each vessel in turn comes to the action station, the seal is broken and the gas contained in the vessel is thereby released into the gas-measuring system. Thus breaking the seal of the vessel generates an aliquot of a gas to be measured. This aspect is described below with reference to Figure 8 of the drawings.

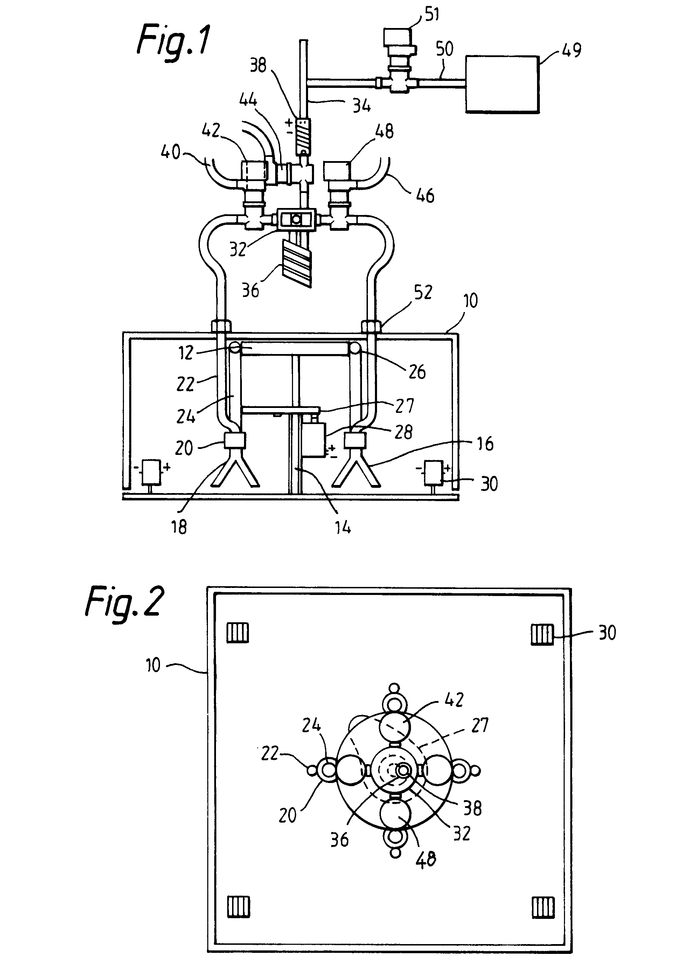

In another embodiment, each vessel is a reaction vessel to contain separate aliquots of a sample and a reagent, and a means for disturbing a vessel at the action station act to mix the separated reagents therein. This aspect is described below with reference to Figures 1 - 4 of the drawings. When the sample is a carbonate sample and the reagent is an acid, this is herein called the carbonate digestion mode.

The reaction vessel may be of inverted Y shape, with one arm (or bag) to carry the sample, the other arm (or bag) to carry the reagent, and the stem connected to the common vacuum pump. On reaching the action station, a reaction vessel may be tipped so as to transfer a reactant from one arm (or bag) to the other.

The vessels may be connected to the common vacuum pump by individual lines leading via individual valves to a common manifold. A single water trap may be present adjacent to the common manifold or water traps may be fitted to each line to minimise gas transfer distances, cold enough to remove any water vapour from the evolved gas, but not so cold as to condense the gas to be measured. A cold finger may be positioned between the water trap (or the manifold in the preferred embodiment) and the inlet of the mass spectrometer or other gas-measuring instrument. The temperature of the cold finger can be controlled, either so low as to form a condensed coating of the gas to be measured; or so high as to re-evaporate the condensed coating and pass the gas forward for measurement. Water traps and cold fingers are known in the field and will not be described in detail here.

Preferably the valves are arranged in radial symmetry round the common manifold. This arrangement minimises gas transfer distances and makes them all equal. A radially symmetrical arrangement also permits use of a cam to move round a central pivot so as to disturb vessels attached (directly or indirectly) to the valves.

The carousel containing the vessels is preferably housed within a thermostatically controlled casing. The property of the gas which is measured is not material to the invention. Preferably a mass spectrometer is provided, which not only identifies the gas but is also effective to determine its isotopic composition. The nature of the gas to be measured is not material to the invention, but is generally sulphur dioxide, oxygen, water vapour, or, particularly, carbon dioxide.

The sample and the reagent in each reaction vessel are exposed to high vacuum conditions, possibly at elevated temperature, and must be non-volatile under the conditions chosen. For the measurement of carbon dioxide from carbonate samples, syrupy anhydrous orthophosphoric acid is suitable.

U.S. Patent 4,495,414 describes a gas measurement system comprising a mass spectrometer and a cold finger. This system is suitable for use in conjunction with the device of the present invention.

There follows a description of a preferred device according to the invention, with reference to the accompanying drawings in which:-
Figure 1 is a diagrammatic side elevation of one embodiment,
Figure 2 is a corresponding plan,
Figure 3 is a diagrammatic side elevation of another embodiment,
Figure 4 is a corresponding plan,
Figure 5 is a diagramnatic side elevation of the entire unit, and
Figure 6 is a corresponding plan.
Figure 7 is a diagrammatic side elevation of the embodiment illustrated in Figure 3 where the device is configured for multiport gas admission mode, and
Figure 8 is a diagrammatic side elevation of this embodiment where the device is configured for tube cracker multiport gas admission mode.

In the side elevations, some parts are omitted for clarity and the complete valve assembly is not shown. In the plans, some hidden detail is omitted for clarity.

### Referring to Figures 1 and 2:-

Within a casing 10 is mounted a circular carousel 12 for rotation in a horizontal plane about a pivot 14. As shown, the carousel comprises four reaction vessels 16, although in practice there would be a larger number e.g. ten to fifty of reaction vessels. Each reaction vessel is in the shape of an inverted Y, with one arm to carry a sample and the other arm to carry a reagent. The stem 18 of the vessel is mounted by means of a high vacuum fitting 20 at the end of a pipe 22. The vessel is supported by an arm 24 pivotally mounted at 26 on the carousel 12. Mounted on the pivot 14 is an eccentric cam 27 and a stepper motor 28 by which the cam is rotated relative to the carousel (it being immaterial whether the carousel or the cam remains stationary). The temperature within the casing 10 is controlled by means of heater elements 30.

The individual pipes 22 are connected to a common manifold 32. From the manifold, a single common pipe 34 leads via a cold trap 36 and a cold finger 38 to a mass spectrometer (not shown) or other measuring means. The cold finger can be cooled by means of liquid nitrogen (not shown) or heated by an electric heater (not shown). A vacuum pump (49) is connected via lines 34 and 50 through valve 44 to the system. Air supply lines 40 and 46 are connected to pneumatic valves 42 and 48 in Figs. 1 and 2. All valves in the system are pneumatic and supplied by air-supply lines from a compressor (not shown). Valve 51 isolates pump 49 when the device is supplying gas to the mass spectrometer.

In use, a carbonate sample is placed in one arm of each reaction vessel 16. Purified orthophosphoric acid is placed in the other arm. Each reaction vessel is secured to its pipe 22, the casing 10 is closed around the carousel 12 comprising the reaction vessels. With valves 42, 48 and all others connecting to the reaction lines (not shown but may number 16 or more) as well as valve 44 open, the reaction vessels and piping are evacuated to better than 10-³ mb. The entire system from the cold finger 38 to the reaction vessels 16 are now in equilibrium at a stable vacuum of better than 10-³ mb.

Liquid nitrogen is pumped into the cold finger 38, to bring its temperature to -196°C. The water-trap 36 is maintained at -100°C throughout the run using a commercially available cryogenic cooler. The heater elements 30 maintain the temperature within the casing 10 at a suitable temperature for example 90°C.

Under computer control, the stepper motor 28 rotates the eccentric cam 27. This has the effect of tilting one arm, for example 24 and with it one reaction vessel 16 to the extent that the separated reactants therein mix and react together with evolution of carbon dioxide and water. The gas mixture passes via the pipe 22 and the manifold 12 to the cold trap 16 where water is frozen out, and then to the cold finger 18 where dry carbon dioxide is frozen out.

The valves 44 and for example 42 are then shut, and the supply of liquid nitrogen to the cold finger 18 stopped. The cold finger is heated, the carbon dioxide evaporates and passes via line 34 to the mass spectrometer. After measurement has been completed or even during the final stages of measurement, the valve 44 is reopened as well as valve 51 and the system is pumped to removed residual gas. Then the stepper motor 28 rotates the eccentric cam 27 to activate the next reaction vessel on the carousel.

For simplicity, the carousel is shown herein as comprising only four reaction vessels. In practice, a carousel would have more reaction vessels than this, for example sixteen reaction vessels.

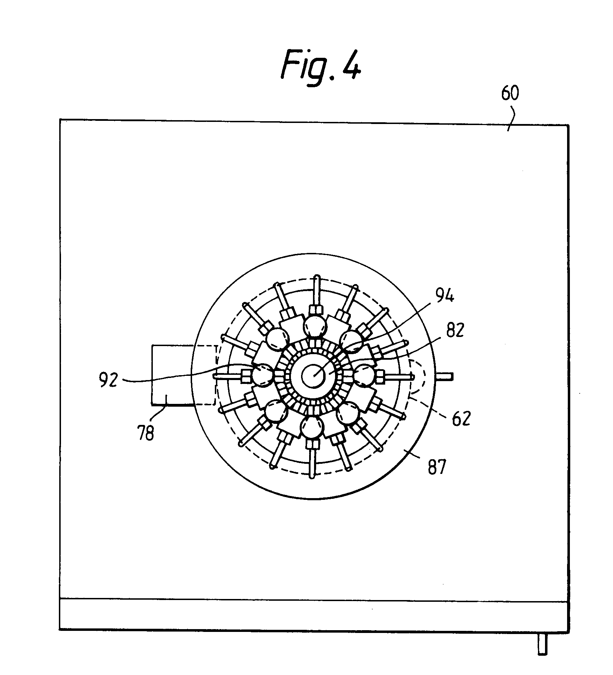

### Referring now to Figures 1 and 4:-

Within an oven 60 is mounted a circular cam 62 for rotation in a horizontal plane about a pivot 64. As shown in side elevation, the system comprises two reaction vessels 66, although in practice there would be a larger number e.g. 10 to 50 of reaction vessels. Each reaction vessel is in the shape of a flask with a partition at the base dividing it into two bays, with one bag to carry a sample and the other bag to carry a reagent. The neck 68 of the reaction vessel is mounted by means of a high vacuum Cajon fitting 70 at the end of a flexible pipe 72.

Each flexible pipe 72 connects to a stainless steel pipe 77. The flexible pipe 72 plus the stainless steel pipe 77 and their associated fittings together comprise a unit named a reaction line. The movement of the flexible pipes 72 in a radial direction only is constrained by a supporting frame 74. The cam 62 connects via the pivot 64 to gearing 76 which translates rotary motion from a stepper motor 78 through 90°. In this way the cam rotates relative to the reaction lines and moves the flexible pipes radially in sequence.

The individual reaction lines 72, 77 pass through a cryogenic annulus 87 which is chilled to -100°C by refrigerant from a cryogenic recirculator (such as a Neslab ULT-95). In this way contaminant water is trapped within each reaction line and gas transfer distances are minimised due to the lack of a common cold-trap.

Each reaction line 72, 77, is connected to a common manifold 82. From the manifold, a single common pipe 84 connects directly to a cold-finger 88 and from there to a mass spectrometer (not shown) or other measuring means. The cold finger can be cooled by means of liquid nitrogen (not shown) or heated by an electric heater (not shown). The line 83 leads to the vacuum system pumps (not shown). The line 84 leads via the valve 86 to the mass spectrometer inlet (not shown). The vacuum system is connected via lines 83, 84 and 85 through valves 86 and 95 to the system. Air supply lines 90 and 96 are connected to pneumatic valve 92 and 98. All valves (except perhaps those required for initial manual purging of the system) are pneumatic and supplied by air-supply lines from a compressor (not shown). Valve 95 isolates the vacuum pumping system when the device is supplying gas to the mass spectrometer.

In use, a carbonate sample is placed in one bag of each reaction vessel 66. Purified orthophosphoric acid is placed in the other bag. Each reaction vessel is secured to its pipe 72, the oven 60 is closed around the reaction lines and supporting frame 74. With valves 92, 98 and all others connecting to the reaction lines (not shown but may number 16 or more) as well as valve 91 open, the reaction vessels and piping are evacuated under manual control to better than 10-³ mb via valves 93 and 97. Initially valves 97 and 91 are opened (valve 97 being connected to capillary tubing to allow slow initial pumping so as not to disturb the samples and reagents within their reaction vessels). After this slow initial purging, valve 97 is shut and valve 93 opened to complete manual purging of the system. When manual purging is complete, valves 93 and 91 are shut and control is transferred to a computer (not shown) which opens valve 94 prior to the start of a run, thereby transferring pumping to the mass spectrometer inlet pumping system. The entire system from the cold finger 88 to the reaction vessels 66 are now in equilibrium at a stable vacuum of better than 10-³ mb.

Liquid nitrogen is pumped into the cold finger 88, to bring its temperature to -196°C. The cryogenic annulus 87 is maintained at -100°C throughout the run using the commercially available cryogenic recirculating cooler. Heater elements (not shown) maintain the oven 60 at a suitable temperature for example 90°C, thermostatically controlled to an accuracy of ±0.1 °C.

Under computer control, the stepper motor 78 rotates the eccentric cam 62. This has the effect of tilting one reaction line, for example the reaction line connected to valve 92, and with it one reaction vessel 66 to the extent that the separated reactants therein mix and react together with evolution of carbon dioxide and water. The gas mixture passes via the reaction line (which passes through the cryogenic annulus 87 where water is frozen out) to the manifold 82 and thence to the cold finger 88 where dry carbon dioxide is frozen out.

The valves 94 and for example 92 are then shut, and the supply of liquid nitrogen to the cold finger 88 stopped. The cold finger is heated, the carbon dioxide evaporates and passes via line 84 to the mass spectrometer. After measurement has been completed or even during the final stages of measurement, the valve 94 is reopened as well as valve 95 and the system is pumped to remove residual gas. Then the stepper motor 78 rotates the eccentric cam 62 to activate the next reaction vessel in the system.

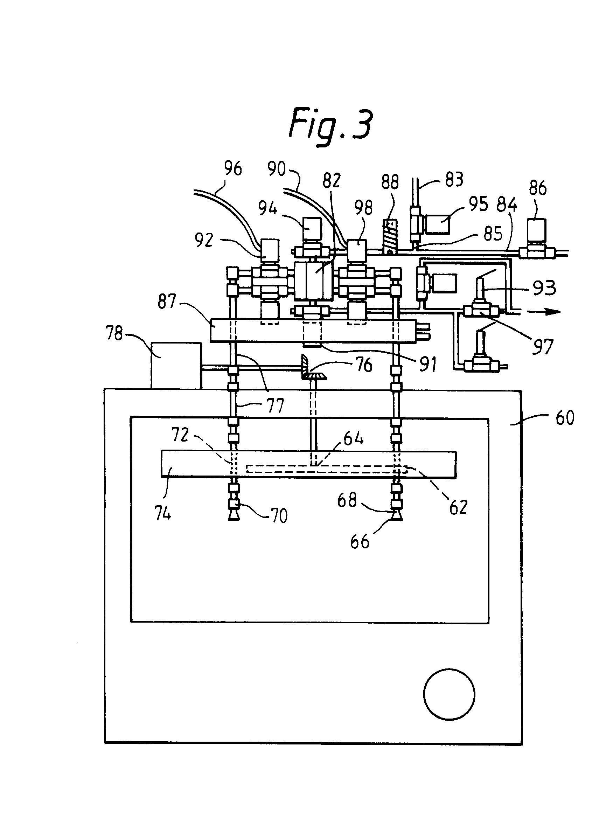

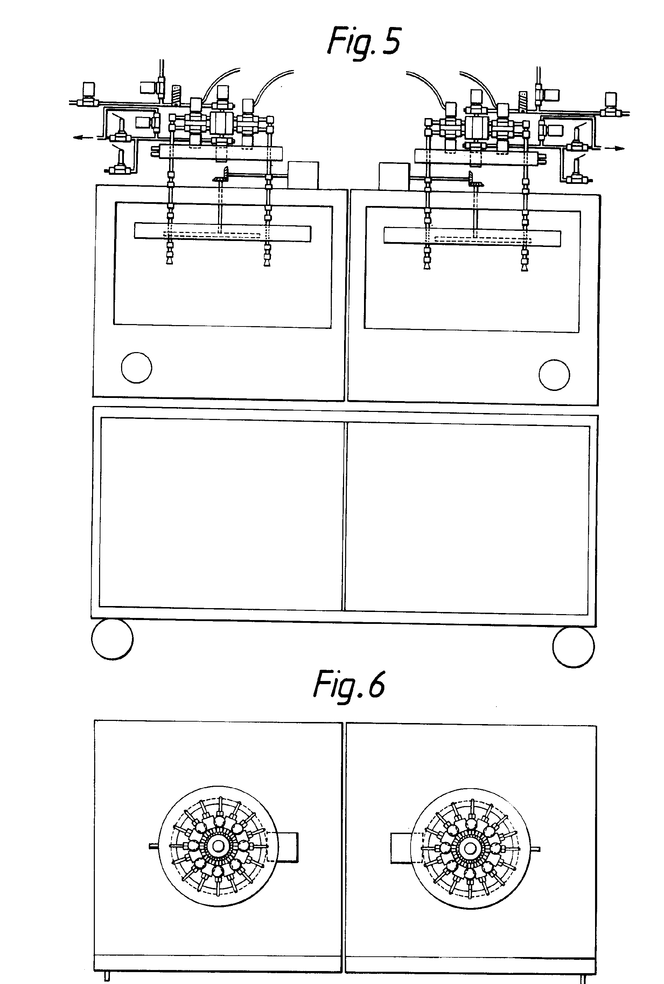

Figure 5 is a schematic side elevation of a complete unit comprising two of the devices shown in Figures 3 and 4. Figure 6 is a schematic plan of the same. The unit is carried on a trolley containing a pumping system for manual purging plus solenoid valves (to control air distribution to the pneumatic valves) plus a local computer interface if required. By providing two or more devices in the unit, operation can be arranged sothatone is in use while the others are being cleaned or set up. In this way the mass spectrometer can be arranged to run almost continuously.

### Referring to Figure 7:-

This device can be made to act as a multiport gas admission system as well as or instead of, a carbonate digestion device. (The common manifold plus valve assembly are supported by legs 101). In use, the operator disconnects all the reaction lines 72, 77 from the valves (e.g. 92, 98) of one or both modules (in the former case one module would then act as a multiport gas admission system, while the other would act as a carbonate digestion device; in the latter case the two modules would act as two multiport gas admission systems) and reconnects standard Cajon Ultra-Torr adaptors (100) (such as Swagelok SS-4-UT-A-4 fittings) to all the valves which had been attached to the reaction lines 72, 77 (e.g. 92, 98). Subsequently valved gas vials can be attached to these fittings and therefore also the manifold and the inlet of the mass spectrometer. After all the gas vials have been attached, the system is manually purged in the same manner as when the device is entirely in carbonate digestion mode. However, before control is handed to the computer all the valves attached to the manifold are closed and the valves on the gas vials are opened so that the gas carried in the vials is held back only by the manifold valves (e.g. 92, 98). The software is toggled to multiport gas admission mode for one or both modules and then control is handed to the computer. The computer then opens the valves in sequence in the same way as when the device is in carbonate digestion mode but does not move the cam. In addition the cryogenic annulus is not used in multiport gas admission mode.

### Referring to Figure 8:-

The device when in multiport gas admission mode can be made to operate as a "tube cracker/mul- tiport gas admission assembly" by the reconnection of the reaction lines 72, 77. In this mode the dual-bag reaction vessels used for carbonate digestion are not connected, but a pre-prepared glass tubes filled with the gas to be analysed and sealed using standard glass blowing techniques is inserted into each flexible pipe 72. The pipe 72 is then sealed by inserting a piece of steel rod into the fitting 70 and tightening it. In use the device is purged in the same way as for carbonate digestion mode but when the cam rotates the radial movement of the flexible pipe 72 breaks the glass tube within it and allows the gas to enter the manifold and then the sample inlet of the mass spectrometer. If water contamination of the gas is suspected, the cryogenic annulus 87 can be used to freeze out contaminants as they pass through the reaction lines 72, 77. If another contaminant gas which is condensible in the range 0 to -100°C is suspected of being present, the cryogenic annulus can be used to freeze this gas out of the gas mixture to be analysed. By use of appropriate Swagelok adaptors attaching to line 77 the size of the flexible pipe 72 can be varied to accommodate different sizes of glass tube.

## Claims

1. Gas measuring device comprising a carousel of vessels, each to generate a separate aliquot of a gas and connected to a common vacuum pump, an action station provided with means for disturbing a vessel, means for recovering and measuring a gas thereby generated, and means for effecting relative movement of the carousel and the action station so as to bring each vessel in turn to the action station.

2. Gas measuring device as claimed in claim 1, wherein each vessel is a sealed gas-containing vessel and the means for disturbing a vessel at the action station are means for breaking the seal.

3. Gas measuring device as claimed in claim 1, wherein each vessel is a reaction vessel to contain separate aliquots of a sample and a reagent, and the means for disturbing a vessel at the action station act to mix the separated reagents therein.

4. Device as claimed in claim 3, wherein a reaction vessel is of inverted Y shape, with one arm to carry the sample, the other arm to carry the reagent, and the stem connected to the common vacuum pump.

5. Device as claimed in claim 3, wherein a reaction vessel is a flask with a partition between two bays, one to carry the sample and the other to carry the reagent, the neck of the flask being connected to the common vacuum pump.

6. Device as claimed in any one of claims 1 to 5, wherein the carousel is housed within a thermostatically controlled casing.

7. Device as claimed in any one of claims 3 to 6, wherein the reaction vessels are connected to the common vacuum pump by individual lines leading via individual valves to a conmmon manifold

8. Gas measuring device comprising a common manifold leading to common gas-measuring means and connected to a common vacuum pump, a plurality of valves arranged in radial synmmetry round the common manifold, a plurality of sample vessels each to contain or generate an aliquot of a gas to be measured and means for introducing the gas contained or generated in each sample vessel successively via a said valve into the common manifold.

9. Device as claimed in claim 8, wherein each sample vessel is in communication through a valve with the common manifold, and there are provided means for opening a first valve connecting a first sample vessel to the common manifold, closing the first valve, and successively opening and closing each other valve connecting each other sample vessel to the common manifold.

10. Device as claimed in any one of claims 7 to 9, wherein a water trap is present adjacent to the common manifold.

11. Device as claimed in claim 10, wherein a cold finger is positioned between the water trap and the gas-measuring means.

12. Device as claimed in claim 7, wherein each individual line passes through a cryogenic annulus on its way to the common manifold thereby trapping water in that part of the reaction line.

13. Device as claimed in claim 12, wherein a cold finger is positioned between the manifold and the gas-measuring means.

14. Device as claimed in any one of claims 1 to 13, wherein a mass spectrometer is provided to measure the gas.

15. Device as claimed in any one of claims 1 to 14, adapted to measure carbon dioxide generated by reaction of a carbonate sample with an acid.

16. Device as claimed in any one of claims 1 to 15, which is capable of being operated in a carbonate digestion mode and in a multiport gas admission mode.
